# EUROPEAN PATENT SPECIFICATION

(11) **EP 2 574 303 B1**
(45) Date of publication and mention of the grant of the patent: **18.02.2015**
(21) Application number: 12006781.4
(22) Date of filing: 28.09.2012
(51) Int. Cl.: A61C 9/00

(54) **Dental impression tray**
Zahnabdrucklöffel
Porte-empreinte dentaire

(30) Priority: 30.09.2011 JP 2011217753
(43) Date of publication of application: 03.04.2013
(73) Proprietor: GC Corporation, Bunkyo-ku Tokyo 113-0033 (JP)
(72) Inventor: Yasaki, Hideaki, Tokyo (JP); Kamohara, Hiroshi, Tokyo (JP)
(74) Representative: Müller-Boré & Partner Patentanwälte PartG mbB

(56) References cited:
- JP-A- 2008 220 604
- US-A- 2 924 011
- US-A- 5 478 235

## Description

The present invention relates to a dental impression tray used at a time of impression taking in an oral cavity, as a preparation stage producing a complete denture which is a dental prosthesis in dentistry. In the dental impression tray, since a handle portion does not strongly contact to a lip at a time of impression taking, the impression can be accurately taken. When the dental impression tray is used at a time of bite taking for recording occlusal positions, a handle portion can be detached, so that highly precise bite taking can be performed.

In a dental treatment, when the impression taking in an oral cavity is performed as a preparation stage for producing a dental prosthesis, an impression material, such as, a silicone impression material, an alginate impression material, or the like, has been used. For inserting and holding such an impression material in an oral cavity, an impression tray has been used. In such an impression tray, a handle portion is generally formed in front of the impression tray, for inserting an impression material in an oral cavity and removing the impression material from the oral cavity after curing of the impression material.

Therefore, the handle portion is generally needed in the impression tray. On the other hand, especially, when impression taking of an edentulous patient is performed at a time of producing a denture, the handle portion becomes in a state strongly contacting to a patient's lip, so that a problem in which an accurate impression taking in the lip side can not be performed has occurred. The reason of this is as follows. Comparing with the impression tray used for the dentate patient, in the impression tray used for impression taking of the edentulous patient, the depth of the inner surface of the tray is shallow by only a height of the teeth remaining in a dentate patient, since there are no teeth. Thus, the handle portion formed in front of the impression tray becomes a state strongly contacting to a lip, so that the lip side of the impression tray is lifted. In other words, in the impression taking of the edentulous patient for producing the complete denture, even though it is necessary for producing a denture with good compatibility to take a functional impression of an oral mucosa, the functional impression taking can not be sufficiently performed, because the handle of the impression tray becomes the state that the handle strongly contacts to the lip.

Further, at a time of producing dental prosthesis, it is necessary for recording positions of an upper jaw and a lower jaw to perform bite taking for recording occlusal positions besides the impression taking. Especially, at a time of producing the complete denture, a wax bite rim made by mainly using wax is produced and the occlusal position is determined. However, the determination of the occlusal position using the wax bite rim is an operation which is very complicated and requires much time. Therefore, at a time of the impression taking, the bite taking for recording occlusal positions may be performed. In such a case, the bite taking for recording occlusal positions is necessary to perform using the impression tray. Thus, the positions of the upper jaw and the lower jaw are recorded by simultaneously using the impression tray for the upper jaw, in which the impression material is cured, and the impression tray for the lower jaw similar to the impression tray for the upper jaw. However, when the impression trays for the upper jaw and the lower jaw are used simultaneously, movements of the tray of up and down, and left and right are restricted by the handle portions, and a problem that bite taking for the accurate recording occlusal positions can not be performed, has occurred. Further, when the impression trays for the upper jaw and the lower jaw are used simultaneously, a mouth of the patient must be in a closed state at a time of bite taking for recording occlusal positions. Thus, the state of the impression material at the rear part of the tray can not be confirmed by the existence of the handle portion. Furthermore, the state that a flow of the impression material into inside of the throat could occur can not be confirmed, so that it becomes very dangerous for the patient. Such a state could occur when large amount of the impression material is used or the flowability of the impression materials is high.

As for an impression tray solving these problems of such a conventional impression tray, Japanese Patent Application Laid-Open No. H8-266561 discusses a dental impression tray having a detachable handle to a projection portion provided in front of a specified shaped tray body. However, in this dental impression tray, although the handle can be detached from the tray body, the projection of the tray strongly contacts to a lip at a time of impression taking since the tray has the projection at the front part thereof. Thus, there has been a problem that the accurate impression taking and bite taking for recording occlusal positions can not be performed.

Further, Japanese Patent Application Laid-Open No. 2001-333917 discusses a following dental impression tray. That is, in a bottom part of the upper jaw tray body, downward convex stands are formed on the left side part, the right side part, and the rear side part. In the bottom part of the lower jaw tray body, upward convex stands are formed on the left side part, right side part, and the back side part. The downward convex standing in the upper jaw tray body and the upward convex standing in the lower jaw tray body are contacting each other with each stand face, so that these tray bodies can be integrally provided in an oral cavity. However, this dental impression tray is made for accurately obtaining a vertical dimension of occlusion, and has not been taken into consideration about a problem in which plate-shaped handles are strongly contacted to a lip at a time of impression taking. The plate-shaped handles are expanded from the bottom sides of the rear part of the tray bodies. Thus, there has been the fault that highly precise impression taking and bite taking for recording occlusal positions can not be performed.

Document US 5,478,235 discloses a dental impression tray comprising a tray body having an engaging convex portion on an anterior tooth part of the area corresponding to an alveolar crest of the tray body, and a handle portion having an engaging portion engaging with the engaging convex portion.

Document JP 2008220604 discloses a L-shaped handle welded on an engaging convex portion of an impression tray.

The present invention is a dental impression tray used for impression taking and bite taking for recording occlusal positions which are performed at a time of producing a complete denture in a dental treatment. Comparing with the impression tray used for the dentate patient, in this impression tray, even though a depth of an inner surface of the tray is shallow by only a height of the teeth since there are no remaining teeth, impression taking and bite taking for recording occlusal positions can be performed in a state that a handle part of the tray does not strongly contact to a lip. Further, in this impression tray, the handle portion can be detached at a time of bite taking for recording occlusal positions, so that highly precise bite taking can be performed.

Present inventors carried out earnest works to solve the aforementioned problems and, as a result, they found out the followings to complete the present invention. That is, if a dental impression tray has a structure including a tray body having an engaging convex portion on an anterior tooth part of the area corresponding to an alveolar crest of the tray body and a handle portion for engaging the engaging convex portion, the above problems can be solved.

That is, the present invention is the dental impression tray having the features disclosed in claim 1.

As for the engaging convex portion and an engaging portion, there is one embodiment in which the engaging convex portion is a projection and the engaging portion is a hole to engage with the projection, and another embodiment in which the engaging convex portion is a dovetail projection and the engaging portion is a dovetail groove engaging with the dovetail projection by sliding.

Comparing with the impression tray used for the dentate patient, even though the dental impression tray according to the present invention is the impression tray in which the depth of the inner surface is shallow by only the height of the teeth since there are no remaining teeth, an accurate impression taking can be performed. The reason of this is as follows. That is, in this impression tray, the engaging convex portion is provided on an anterior tooth part of the area corresponding to an alveolar crest of the tray body. In a state when the engaging convex portion and the engaging portion provided at a top end of the handle portion are engaged, a portion protruding from an oral cavity, in which the engaging portion is not provided, becomes to the state not strongly contacting to a lip, at a time of impression taking, so that, as described above, the accurate impression taking can be realized. When the bite taking for recording occlusal positions is performed, the handle portion can be detached, so that the highly precise bite taking can be performed.
Fig. 1 is a perspective view illustrating an outer surface of one embodiment of a dental impression tray according to the present invention.
Fig. 2 is a perspective view illustrating an inner surface of the dental impression tray according to the present invention illustrated in Fig. 1.
Fig. 3 is a perspective view illustrating a state that a handle portion is detached from the dental impression tray according to the present invention illustrated in Fig. 1.
Fig. 4 is a perspective view illustrating a state that a handle portion is detached from another embodiment of the dental impression tray according to the present invention.

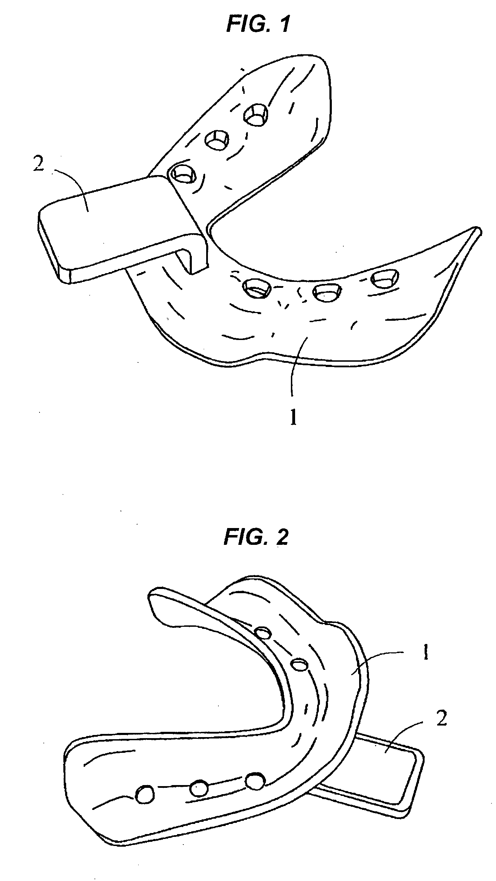

In figures 1 to 4, a tray body 1 is a dental impression tray according to the present invention. As a material of the tray body 1, a material with high rigidity, such as metal, plastic, and the like can be used. In these materials, plastic materials can be adequately used, because the plastic materials can be formed to be a complicated shape, such as, holding holes having an oblong shape/a circular shape, the engaging convex portion 1a, and the like. The holding holes are used to hold a concave portion, in which impression materials are piled, and impression materials. To the engaging convex portion 1a, an engaging portion 2a of a handle portion 2, which will be described below, is engaged. As for the plastic materials, thermoplastic resins, such as, ABS resin, polystyrene, polycarbonate, polyacetal, or the like are preferably used. These thermoplastic resins are high rigidity plastics for preventing deformation at a time of impression taking or being removed from an inner oral cavity.

On an anterior tooth part of the area corresponding to an alveolar crest of the tray body 1, the engaging convex portion 1a engaging with the engaging portion 2a of the handle portion 2, which will be described below, is formed.

A handle portion 2 of the dental impression tray according to the present invention is formed in a L-shape and made of the same material as the tray body 1. On the top end of the shorter part of the L-shaped handle portion 2, an engaging portion 2a engaging with the engaging convex portion 1a provided on an anterior tooth part of the area corresponding to an alveolar crest of the tray body 1 is provided. In addition, the L-shape of the handle portion 2 is not only the strict L-shape but also includes other shapes not strongly contact to a lip in the state that the handle portion 2 protrudes from the anterior tooth part of the area corresponding to an alveolar crest of the tray body 1 to the out of an oral cavity at a time of impression taking. In such shapes, a U-shape, a dome shape, a chevron shape, a fishhook shape, V-shape, and the like are included.

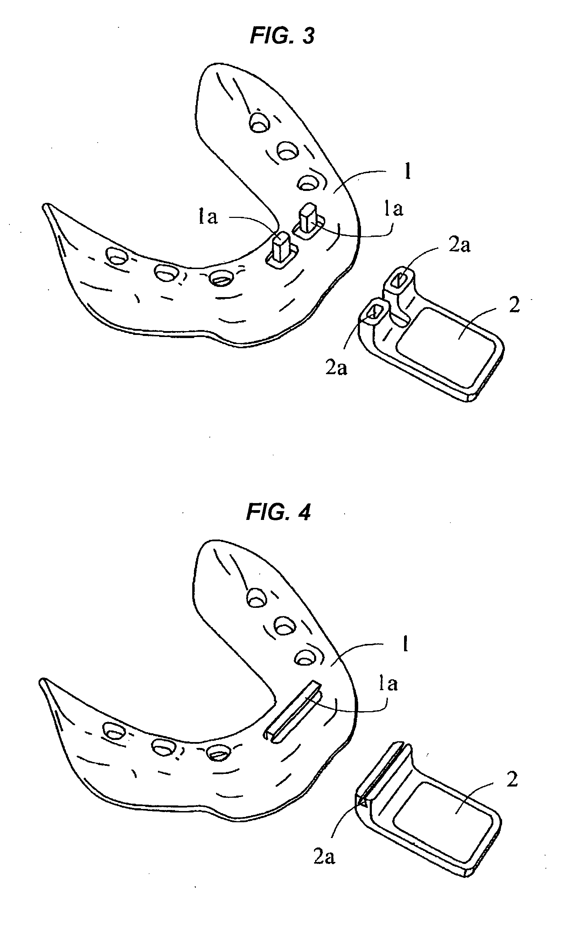

One embodiment of the engaging convex portion 1a provided in the tray body 1 and the engaging portion 2a provided on the top end of the handle portion 2 has a structure in which the engaging convex portion 1a is a projection and the engaging portion 2a is a hole engaging with the projection as illustrated in Figs. 1 to 3. Another embodiment has a structure in which the engaging convex portion 1a is a dovetail projection and the engaging portion 2a is a dovetail groove engaging with the dovetail projection by sliding, as illustrated in Fig. 4.

More specifically, in the embodiment illustrated in Figs. 1 to 3, when a user takes an impression from the state illustrated in Fig. 3, the user vertically rotates the handle portion 2 by 180 degrees to engage the hole, which is the engaging portion 2a provided on the top end of the handle portion 2, to the projection, which is the engaging convex portion 1a provided in the tray body 1, and makes the state in Fig. 1. Then, the user vertically rotates the entirety of the tray by 180 degrees, piles an impression material on an inner surface of the tray, and inserts in an oral cavity, so that the impression taking is performed. At this time, since the part protruding out of the oral cavity, in which the engaging portion 2a in the handle portion 2 is not provided, becomes the state not strongly contacting to a lip, the user can perform accurate impression taking.

Further, in the embodiment illustrated in Fig. 4, when an user takes an impression, from the state illustrated in Fig. 4, the user vertically rotates the handle portion 2 by 180 degrees, slides the dovetail groove, which is the engaging portion 2a provided on the top end of the handle portion 2, to the dovetail projection, which is the engaging convex portion 1a provided in the tray body 1, and makes the similar state as in Fig. 1. Then, the user vertically rotates the entirety of the tray by 180 degrees, piles the impression material in the inner surface of the tray, and inserts the tray in the oral cavity, so that the impression taking is performed. At this time, since the part protruding out of the oral cavity, in which the engaging portion 2a in the handle portion 2 is not provided, becomes the state not strongly contacting to a lip, the user can perform accurate impression taking.

Further, when an user performs the bite taking for recording occlusal positions, in the embodiment illustrated in Figs. 3 and 4 in which the handle portion 2 is detached, the user vertically rotates the tray body 1 by 180 degrees, piles the impression material, inserts in the oral cavity, and performs bite taking. At this time, since the handle portion 2,does not exist, the bite taking can be performed in a state that a mouth is closed, so that the user can perform accurate bite taking.

## Claims

1. A dental impression tray comprising:
a tray body (1) having an engaging convex portion (1 a) on an anterior tooth part of the area corresponding to an alveolar crest of the tray body (1), and
' a handle portion (2) being L-shaped and having an engaging portion (2a) engaging with the engaging convex portion (1a), wherein the engaging portion (2a) being on a top end of the shorter part of the L-shaped handle portion (2), and the handle portion (2) can be detached.

2. The dental impression tray according to claim 1,
wherein the engaging convex portion (1a) is a projection and the engaging portion (2a) is a hole engaging with the projection.

3. The dental impression tray according to claim 1,
wherein the engaging convex portion (1a) is a dovetail projection and the engaging portion (2a) is a dovetail groove engaging with the dovetail projection by sliding.

## Patentansprüche

1. Dentalabformlöffel, umfassend:
einen Löffelkörper (1) mit einem konvexen Eingriffsabschnitt (1a) an einem Vorderzahnteil des Bereichs, der einem Alveolarkamm des Löffelkörpers (1) entspricht, und
einen Griffabschnitt (2), der L-förmig ist und einen Eingriffsabschnitt (2a) aufweist, der mit dem konvexen Eingriffsabschnitt (1a) in Eingriff ist, wobei der Eingriffsabschnitt (2a) an einem oberen Ende des kürzeren Teils des L-förmigen Griffabschnitts (2) ist und der Griffabschnitt (2) abgenommen werden kann.

2. Dentalabformlöffel nach Anspruch 1, wobei der konvexe Eingriffsabschnitt (1 a) ein Vorsprung ist und der Eingriffsabschnitt (2a) ein Loch ist, das mit dem Vorsprung in Eingriff ist bzw. kommt.

3. Dentalabformlöffel nach Anspruch 1, wobei der konvexe Eingriffsabschnitt (1 a) ein Schwalbenschwanzvorsprung ist und der Eingriffabschnitt (2a) eine Schwalbenschwanznut bzw. -rille ist, die mit dem Schwalbenschwanzvorsprung durch Gleiten bzw. Schieben in Eingriff ist bzw. kommt.

## Revendications

1. Porte-empreinte dentaire comprenant :
un corps de plateau (1) ayant une partie convexe de mise en prise (1a) sur une partie de dent antérieure de la zone correspondant à une crête alvéolaire du corps de plateau (1), et
une partie de poignée (2) qui est en forme de L et ayant une partie de mise en prise (2a) se mettant en prise avec la partie convexe de mise en prise (1a), dans lequel la partie de mise en prise (2a) est sur une extrémité supérieure de la partie plus courte de la partie de poignée en forme de L (2), et la partie de poignée (2) peut être détachée.

2. Porte-empreinte dentaire selon la revendication 1,
dans lequel la partie convexe de mise en prise (1a) est une saillie et la partie de mise en prise (2a) est un trou se mettant en prise avec la saillie.

3. Porte-empreinte dentaire selon la revendication 1,
dans lequel la partie convexe de mise en prise (1a) est une saillie en queue d'aronde et la partie de mise en prise (2a) est une rainure en queue d'aronde se mettant en prise avec la saillie en queue d'aronde par coulissement.
